# EUROPEAN PATENT SPECIFICATION

(11) **EP 1 813 513 B1**
(45) Date of publication and mention of the grant of the patent: **26.08.2009**
(21) Application number: 07101192.8
(22) Date of filing: 25.01.2007
(51) Int. Cl.: B62D 59/02, F16H 48/20

(54) **Apparatus for axle velocity correction**
Vorrichtung zur Korrektur der Umlaufgeschwindigkeit einer Drehachse
Dispositif pour corriger la vitesse angulaire d'un axe rotatif

(30) Priority: 31.01.2006 IT BS20060016
(43) Date of publication of application: 01.08.2007
(73) Proprietor: Vallini, Denis, 25070 Bione (Brescia) (IT); Martinelli, Claudio, 25070 Bione (Brescia) (IT)
(72) Inventor: Vallini, Denis, 25070 Bione (Brescia) (IT); Martinelli, Claudio, 25070 Bione (Brescia) (IT)
(74) Representative: Crippa, Paolo Ernesto

(56) References cited:
- CH-A- 329 601
- FR-A- 2 086 732
- GB-A- 1 260 438
- US-A- 3 180 080
- US-A1- 2001 003 393

## Description

The present invention relates to an apparatus for correcting the velocity of vehicle axles, such as the axle of a tractor and the axle of a trailer connected to the tractor.

As known, in four-wheel drive vehicles or also in the vehicles provided with a tractor and a trailer having a pulling axle, the driving means transfer the driving torque, through a gearbox, to a transfer case that distributes such torque between two driving or pulling axles. In the case of four-wheel drive vehicles the axles correspond to a front axle and a back axle of the vehicle, whereas in vehicles with trailer, such axles may coincide for example with the back pulling axle of the tractor and a front axle, pulling as well, of the trailer.

The transfer case realises a fixed type velocity ratio between said front and back axles, typically equal to 1:1. Thus, differences between the vehicle running speed and the rotation speed typically of the output axle of the transfer case may occur in some running conditions. Such running conditions may for example be cornering for a four-wheel drive vehicle; in the case of vehicle with trailer in cornering conditions but also rising or in descent, the trailer typically tends to accelerate or decelerate relative to the tractor. Every time there is a kinematic difference between the vehicle and one of the two axles, the corresponding wheels of that axle tend to slip or skid and an early wear of the wheels therefore occurs. Moreover, such kinematic differences between the axles tend to impair the vehicle stability and to prematurely wear the differential itself.

Solutions are known in the art for obviating such disadvantages, which envisage the use of devices for varying the velocity ratio between the axles. Such devices typically measure the actual angular speeds of the axles and, based on several parameters, among which the running speed of the vehicle, the steering angle, the gear put and the like, adjust the velocity ratio of the transfer case that connects the axles.

However, such known devices are complex and expensive to make. Moreover, they require complex computing systems for instantly processing all the parameters measured and controlling the velocity ratio variation devices accordingly.

It is moreover known to use viscous joints suitable for allowing relative slipping between the axles, so as to change the velocity ratio between the same. However, such devices have very limited driving performance.

US 3 180 080 discloses a velocity correction apparatus comprising adjustment means controlled by means for detecting rotation speed differences between the first and second shafts.

Such disadvantages and limits are solved by a velocity correction apparatus in accordance with claim 1.

Further embodiments of the apparatus according to the invention are described in the following claims.

Further features and the advantages of the present invention will appear more clearly from the following description of preferred non-limiting embodiments thereof, wherein:

figure 1 shows a perspective view of a vehicle provided with a correction apparatus according to the present invention;

figure 2 shows a plan bottom view of the vehicle of figure 1;

figure 3 shows a plan bottom view of a vehicle provided with a correction apparatus;

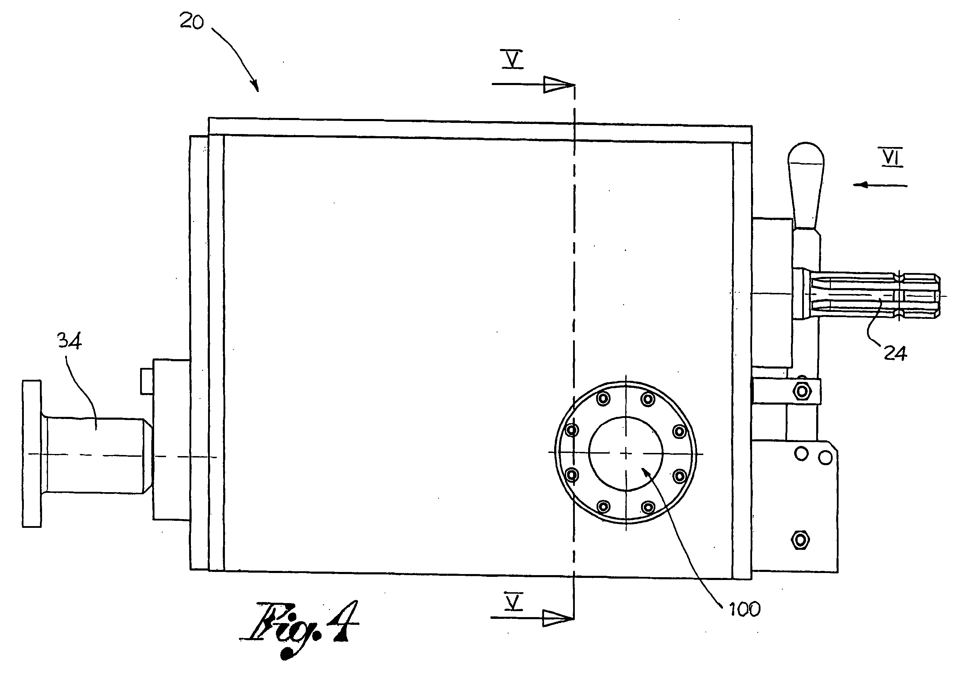

figure 4 shows an orthogonal view of the correction apparatus of figure 1;

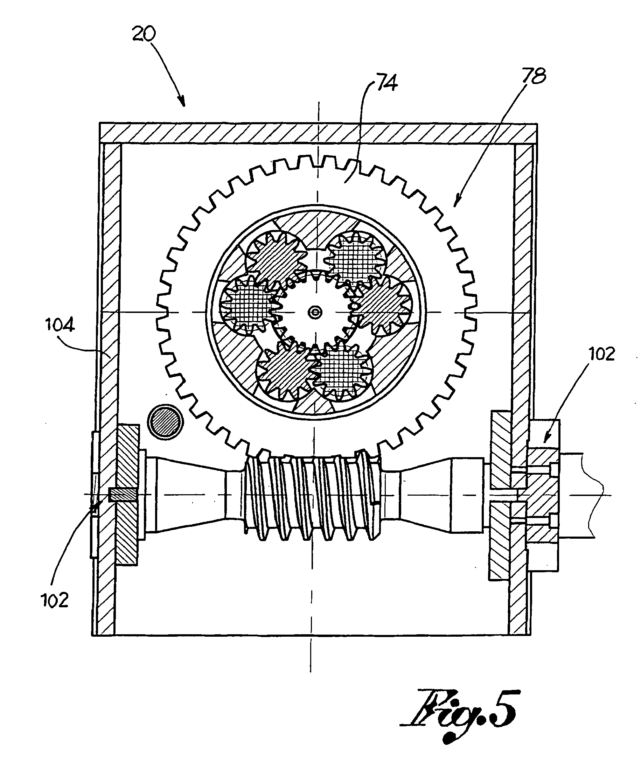

figure 5 shows a section view of the detail of figure 4, along the section line V-V of figure 4;

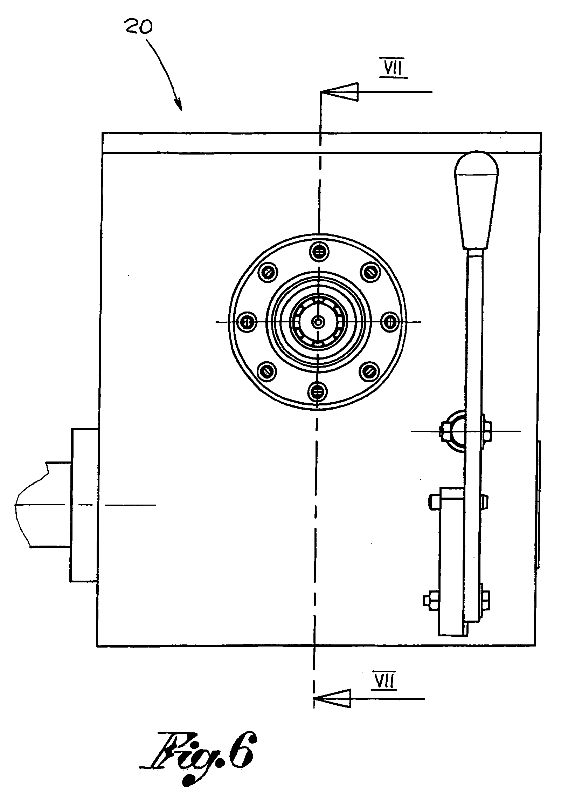

figure 6 shows an orthogonal view of the detail of figure 4, from the side of arrow VI of figure 4;

figure 7A shows a section view of the detail of figure 4, along the section line VII-VII of figure 6;

figure 7B shows a section view of the detail of figure 4, along the section line VII-VII of figure 6, according to a further embodiment of the present invention;

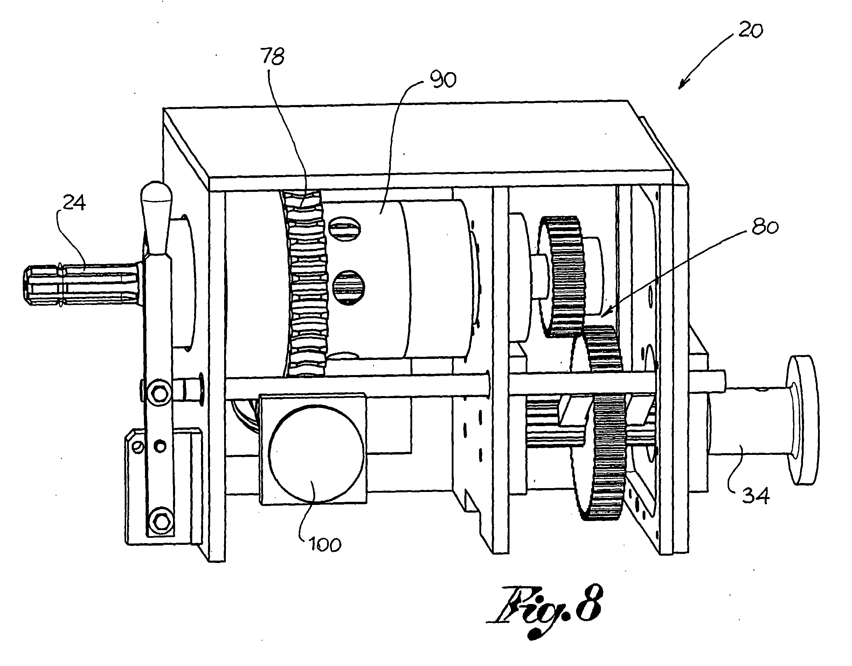

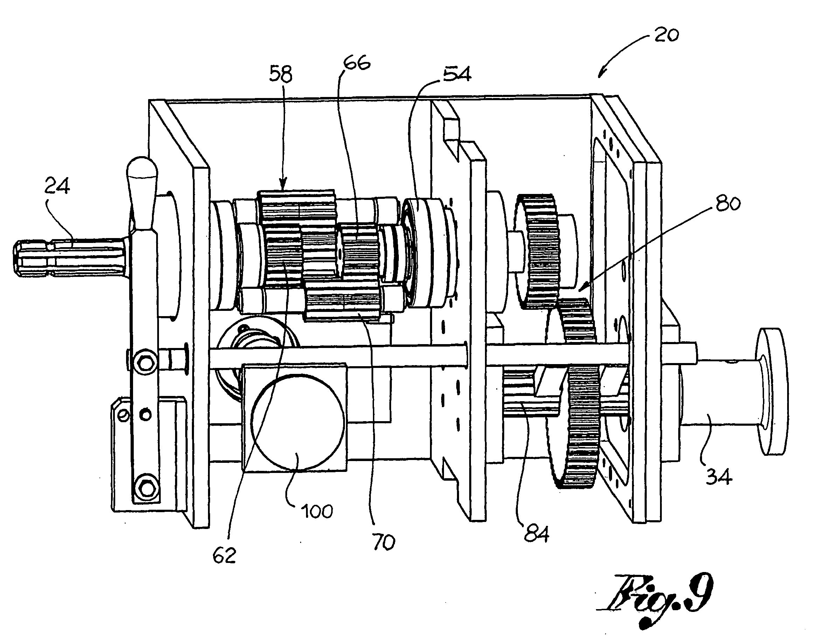

figures 8 and 9 show perspective views of the detail of figure 4, wherein some details have been omitted;

figure 10 shows a block diagram of a possible operating scheme of an apparatus according to the invention;

figure 11 shows a connection layout of an apparatus according to the present invention.

Elements or parts of elements in common between the embodiments described below are referred to with the same reference numerals.

With reference to the above figures, reference numeral 4 indicates a velocity correction apparatus for vehicle axles suitable for supporting relative wheels 14 for moving the same.

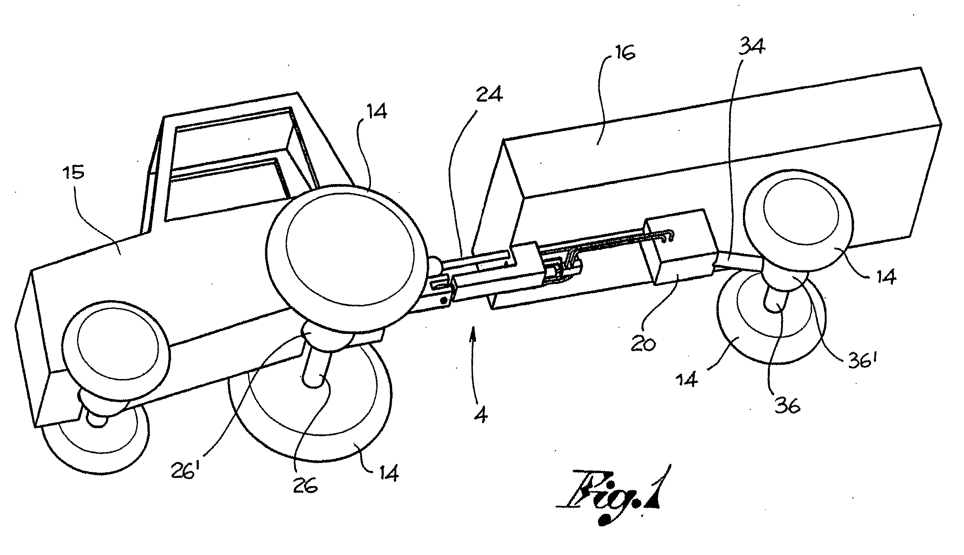

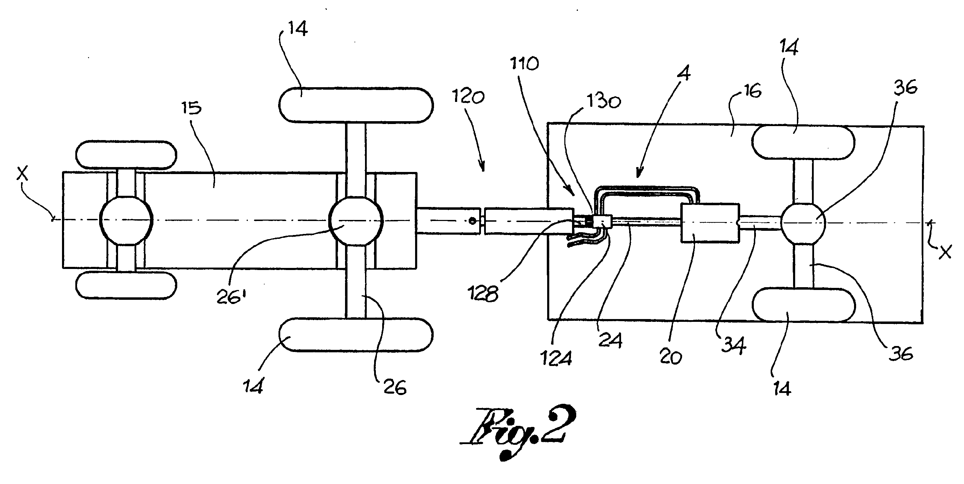

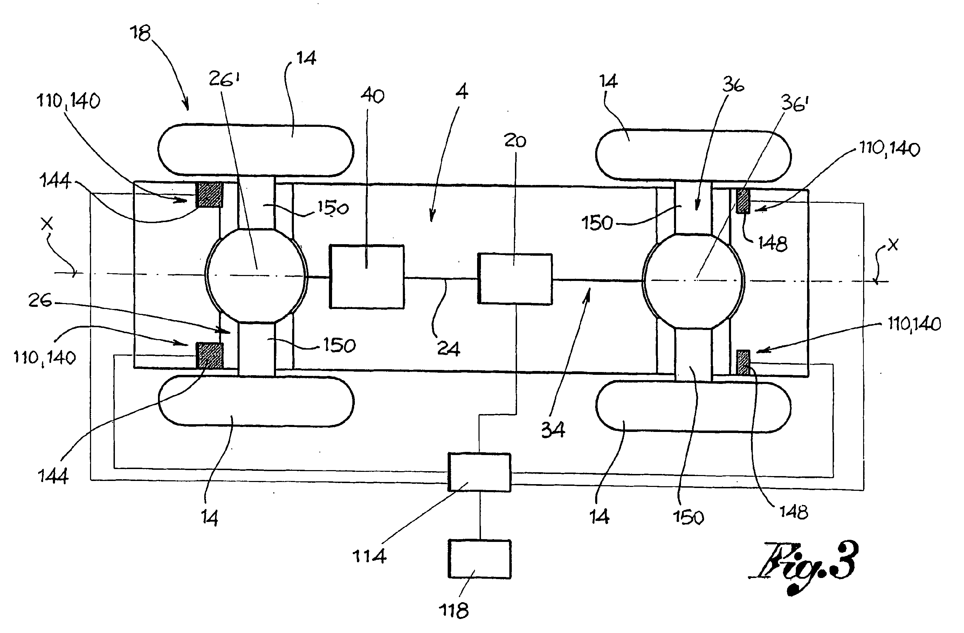

Such vehicles may for example be four-wheel drive vehicles 18 (figure 3) or vehicles comprising a tractor 15 and a trailer 16 (figures 1, 2) to which driving torque is transmitted.

According to an embodiment, apparatus 4 comprises a transfer case 20 provided with a first shaft 24 suitable for being mechanically connected to a first axle 26 of the vehicle and a second shaft 34 suitable for being mechanically connected to a second axle 36 of the vehicle. The vehicle axles are each advantageously provided with a relative differential 26', 36' for adjusting the velocity of the wheels arranged on the same axle.

Shafts 24, 34 are operatively connected to each other according to a velocity ratio so that the second shaft 34 receives motion and driving torque from the first shaft 24. Velocity ratio is the ratio between the angular velocity of the driven shaft, that is the second shaft 34, as compared to the angular velocity of the driving shaft, that is the first shaft 24.

In the case of a four-wheel drive vehicle 18, the first axle 26 may coincide with the front axle of the vehicle and the second axle 36 may coincide with the back axle of the vehicle.

The respective shafts 24, 34 for example are a front shaft and a back shaft respectively, and for example are arranged longitudinally relative to the vehicle, preferably parallel to each other; such shafts are mechanically connected at said transfer case 20.

According to an embodiment, the first shaft 24 receives the motion and the driving torque from the vehicle engine for example through a gearbox 40, and transmits the motion and the driving torque to the second shaft 34 and hence to the back axle 36 that is therefore pulling.

In the case of a vehicle provided with a tractor 15 and with a trailer 16, the first axle 26 may be the back pulling axle of tractor 15 and the second axle 36 may be the front pulling axle of trailer 16; the first shaft 24 transmits the motion from the tractor to the second shaft 34 connected to the pulling axle of trailer 16, through the transfer case 20.

According to further embodiments, the mechanical connection between the first and the second shaft 24, 26 may take place through a hydraulic joint or through an electro-magnetic joint, for example comprising an electro-magnetic clutch suitable for connecting or disconnecting said shafts to/from each other.

According to an embodiment, the first shaft 24 is mechanically connected to a first transmission 54 through at least one driving satellite 58. Preferably a first end 62 of the first shaft 24 engages with said at least one driving satellite 58. The first transmission 54, at a second end 66, preferably facing and coaxial with said first end 62, in turn engages with at least one transmission satellite 70. Said driving and transmission satellites 58, 70 in turn engage with each other by a common train support 74, preferably coaxial with the first shaft 24 and the first transmission 54. Thus, thanks to train support 74, the motion of the first shaft 24 is transmitted to the first transmission 54, preferably according to a velocity ratio equal to 1:1. Said train support 74, diametrically opposite the driving and transmission satellites 58, 70 exhibits an outer toothing 78. The first transmission 54 may be mechanically connected directly to the second shaft 34 or for example a further pair of gears 80 may be added, for example for allowing a shift between said first and second shaft, for modifying the end velocity ratio between the first and the second shaft 24, 34, or also for disconnecting the motion transmission to the second shaft, for example keying one of the gears of said pair on a groove 84, so as to axially slide to disengage on request from the other gear.

Preferably, the train support 74 comprises a crown 88 associated to a collar 90, said crown 88 carrying the outer toothing 78.

Preferably, crown 88 is coaxially associated to collar 90 and is constrained thereto in rotation by a cover 94, having the shape of a circular crown, for example on the first shaft end. Cover 94 exhibits connecting screws 96 that integrally connect in rotation crown 88 and collar 90. Preferably, coaxially to the first shaft 24, cover 94 seats bearings for supporting the rotation of the shaft itself.

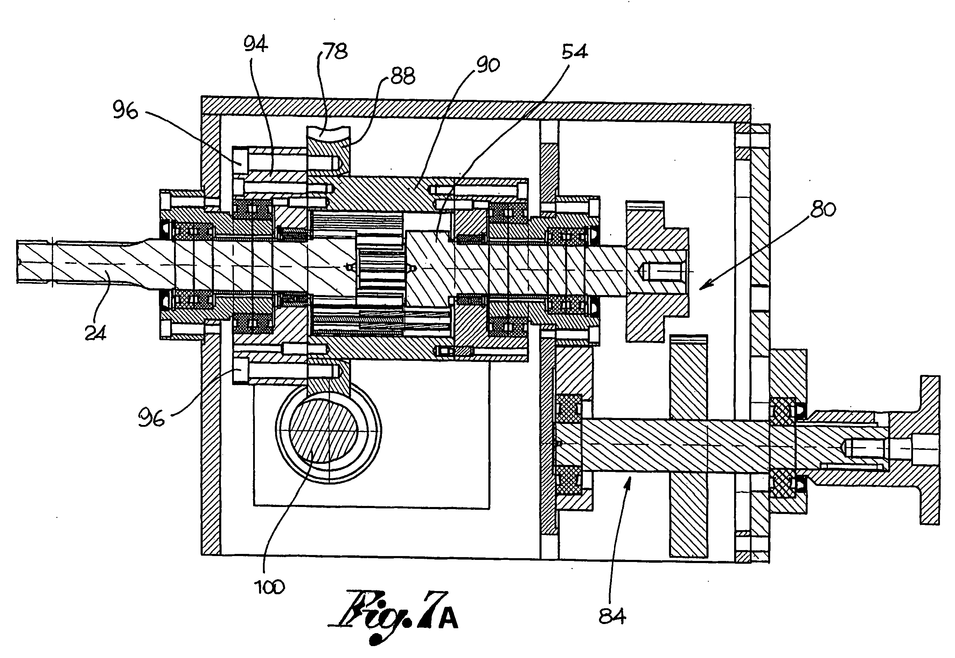

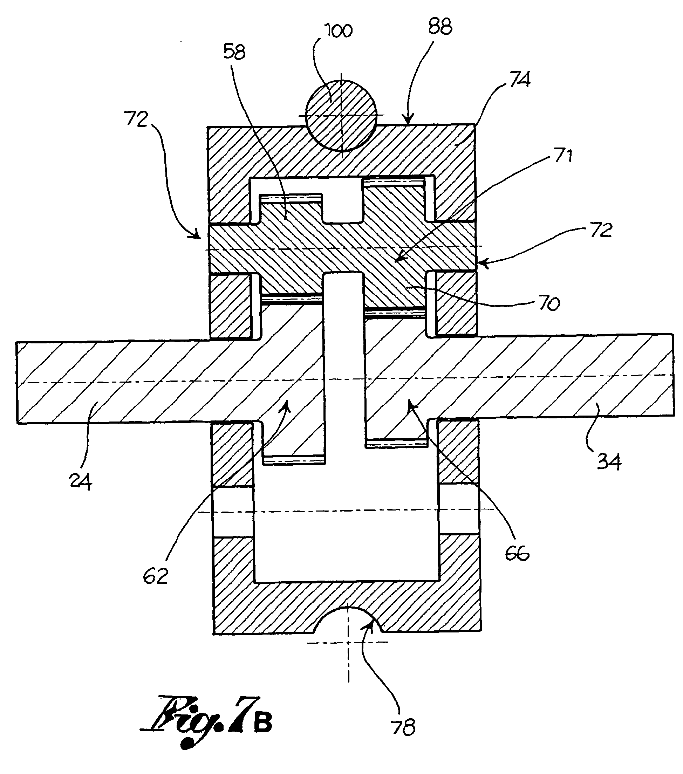

According to a further embodiment (figure 7B), the first shaft 24 is mechanically connected to a driving satellite 58; in other words, a first end 62 of the first shaft 24 engages with at least one driving satellite 58. For example, the first shaft 24 engages with the driving satellite 58 according to a velocity ratio equal to 1:1.6.

The second shaft 34, at a second end 66, preferably facing and coaxial with the first end 62, in turn engages with at least one transmission satellite 70.

For example, the second shaft 34 engages with the transmission satellite 70 according to a velocity ratio equal to 1:1.

Preferably, said satellites 58, 70 are constrained in rotation to each other, preferably they are made integral with each other thus forming a transmission pin 71 that is turnably supported in special seats 72 obtained in the train support 74. For example, such seats 72 comprise bearings or are coated with anti-friction brasses. According to an embodiment, the train support 74 comprises a crown 88 on an outer side surface, which carries an outer toothing 78.

The correction apparatus 4 advantageously comprises adjustment means suitable for modifying said velocity ratio between the first and the second shaft 24, 34.

According to an embodiment, the adjustment means comprise a worm screw 100, for example arranged transversally relative to the extension directions of the first and of the second shaft 24,34, which engages on said outer toothing 78 of the crown of the train support. The worm screw 100 is turnably supported by special supports 102 for example connected to an outer body 104 of the transfer case 20, so as to engage and rotate along with crown 88 of the train support 74.

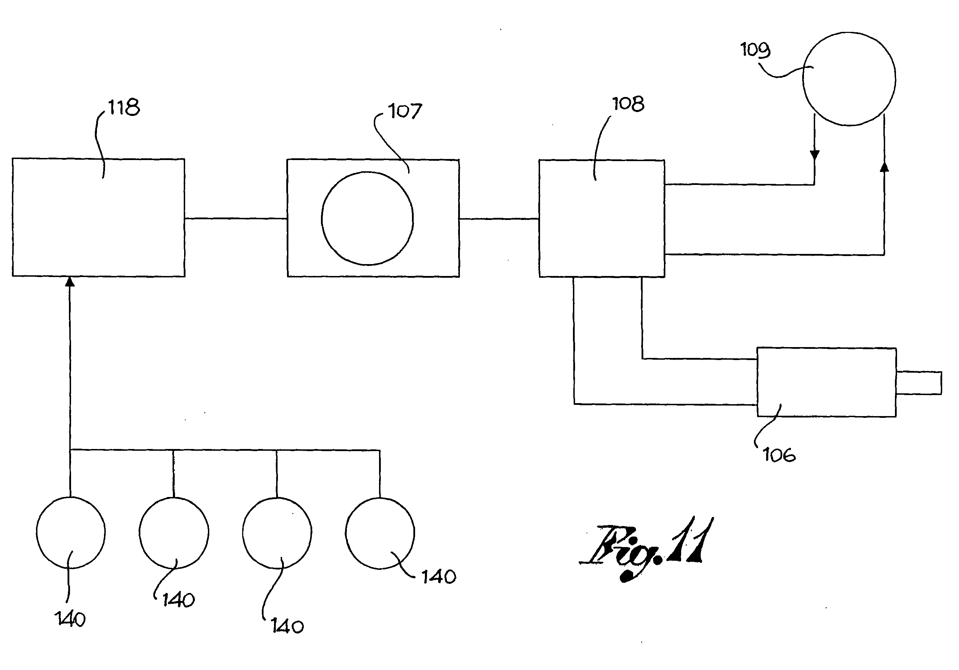

The adjustment means comprise driving means 106 suitable for modifying the velocity ratio between the input and output shafts. Said driving means 106 may for example comprise electric, hydraulic, pneumatic motors. Preferably, if the driving means 106 comprise an electric motor, this is piloted by a power module or a power supply device 107. Preferably, a hydraulic motor is piloted by a proportional solenoid valve 108 in turn connected to a hydraulic pump 109 (figure 11).

For example said driving means 106 may control in rotation the worm screw 100 so as to move in rotation also the train support through the crown.

In the absence of activation of the adjustment means, the worm screw 100 idly engages with the train support 74.

A controlled rotation of the worm screw 100 determines a variation of the overall velocity ratio between the input shaft and the output shaft of the transfer case, that is, between the first and the second shaft 24, 34.

Advantageously, the correction apparatus 4 comprises means 110 for detecting relative movements between the axles at least relative to a running direction X of the vehicle, the detecting means 110, based on said relative movements, controlling the adjustment means so as to modify the velocity ratio between the first and the second shaft 24, 34 for adapting the rotation speeds of the second axle 36 to the actual running speed of the vehicle.

In other words, the detecting means 110 produce an actuation and control signal that actuates and regulates the operation of the adjustment means, so as to modify the velocity ratio between the first and the second shaft 24, 34 based on the parameters measured by the detecting means 110 as regards relative movements between axles 26, 36 at least relative to the running direction of the vehicle.

Preferably, the signals measured by the detecting means 110 are sent to an actuation and control unit 114 that cooperates with a processing unit 118 for processing the same and determining a control signal that, through said actuation and control unit 114 is sent to the driving means 106 that control the worm screw 100 in rotation. The processing unit 118 preferably comprises a microprocessor, software and a data memory 119, which contains a series of operating maps of the device.

According to an embodiment, for example relating to a tractor 15 with trailer 16 (figures 1, 2), tractor 15 is connected to trailer 16 by a telescopic joint 120. The detecting means advantageously comprises a control and actuation valve 124 connected to said telescopic joint 120. Such control and actuation valve 124 comprises a first element 128 integral with the telescopic joint 120 and a second element 130 integral with the trailer.

The two elements 128, 130 are mobile relative to each other so as to shift relative to one another according to the distance between trailer 16 and tractor 15 and therefore between the first and the second axle 26, 36 relative to a running direction of the vehicle. Based on such distance, valve 124 controls said driving means 106, for example a hydraulic motor, to modify the velocity ratio of the transfer case 20, moving the train support 74 in rotation, by the driving means 106, according to a direction equal or opposite to the direction imposed by the input shaft 24 of the transfer case 20.

According to a further embodiment, the adjustment means comprise one or more loading cells 140 suitable for generating a control signal to the driving means 106 based on the forces exchanged between trailer 16 and tractor 15 that will for example be compression forces, as a consequence of a motion of approach of trailer 16 towards tractor 15 and traction forces, as a consequence of a motion of removal of trailer 16 relative to tractor 15.

The loading cells 140 may generate an electric signal suitable for controlling the driving means 106 so as to change the end rotation speed of the second shaft 34 and oppose the relative motions between the tractor and the trailer. Such electric signal may control driving means 106 of electrical type, but also hydraulic driving means, following the same correction logic illustrated for the control and actuation valve 124.

Relating to a four-wheel drive vehicle (figure 3), the correction apparatus 4 comprises a first pair of loading cells 144 at the front axle or first axle 26 and a second pair of loading cells 148 at the back axle or second axle 36.

Preferably, each loading cell is associated to an axle shaft 150 of a corresponding wheel 14 of the vehicle. The loading cells 144, 148 react on the basis of the forces or deformations exchanged between the axle shaft 150 and the vehicle body. In other words, cells 144, 148 detect distance variations between the axle shafts and the body and therefore between the front and back axles 26, 36 of the vehicle. Said distance variations are processed by the processing unit 118 for providing a corresponding correction signal to the actuation and control unit 114 that controls the driving means 106.

For example, the values measured by the loading cells arranged on the axle shafts of a same axle may be averaged so as to obtain a single parameter relating to that exact axle. The differences between the distances measured on the axle shafts of a same axle may be interpreted for example to estimate a vehicle running according to a curvilinear trajectory.

In other words the processing unit 118 detects the curvilinear running condition of the vehicle without any need for sensors that measure for example the steering angle.

The correction logic always envisages the variation of the velocity ratio so as to adjust the speed of the second shaft, that is, of the shaft that leads to the back axle, relative to the vehicle speed.

The operation of a correction apparatus according to the invention shall now be described.

The correction apparatus of the present invention operates modifying the velocity ratio between a first and a second axle operatively connected to each other by a first and a second shaft, respectively input and output, of a transfer case.

In the absence of activation of the adjustment means, the worm screw 100 irreversibly engages idly with the train support 74.

A controlled rotation of the worm screw 100 determines a variation of the overall velocity ratio between the input shaft and the output shaft of the transfer case, that is, between the first and the second shaft 24, 34.

For example, by imposing a rotation equal to the rotation normally imposed by the input shaft and by the satellites to the train support 74, that is, increasing the angular speed of the train support 74, also the end rotation speed of the output shaft and thus the end velocity ratio are increased. Similarly, by imposing a rotation opposite to the rotation normally imposed by the input shaft and by the satellites to the train support 74, the end rotation speed of the output shaft is decreased, decreasing the end velocity ratio.

In particular, in case of installation on a four-wheel drive vehicle, the apparatus changes the velocity ratio between the front axle and the back axle of the vehicle.

The correction logic in the case of four-wheel drive vehicle may be that of adapting the rotation speed of the axles relative to the yaw angle, that is, an angle of rotation of the vehicle about an axis perpendicular to the ground. In other words, when the vehicle covers takes a bend, due to the vehicle yaw the front and back axles cover trajectories having slightly different bending radiuses. If such difference is not corrected, it generates an abnormal wear of the tyres and an excessive mechanical strain on the driving gears. The device logic consists in the fact that if for example the back axle tends to accelerate relative to the front axle, then the loading cells relating to the back axle detect a thrust and generate a signal that is sent to the processing and control unit. Such unit generates a signal for slowing down the rotation speed of the back axle acting on the velocity ratio.

On the other hand, if the back axle tends to brake relative to the front axle, the apparatus changes the velocity ratio so as to increase the rotation speed of the back axle.

In case of installation on a vehicle provided with a tractor and a trailer, the apparatus modifies the velocity ratio between the back axle of the tractor and, for example, the front axle of the trailer.

In particular, the apparatus tends to make the trailer speed relative to the tractor speed even so that the trailer is not accelerated or braked relative to the tractor.

For example, if the trailer approaches the tractor, during a brake of the tractor or for example during a descent, the first and the second element 128, 130 of the valve approach each other and valve 124 generates a pressure signal that controls the driving means 106 to rotate the train support 74 so as to oppose the rotation of the train support 74 and thus oppose the approach motion of trailer 16 towards tractor 15. If on the other hand trailer 16 moves away from tractor 15, during an acceleration of tractor 15 or for example during a rise, the first and the second element 128, 130 of valve 124 move away from each other and valve 124 generates a pressure signal that controls the driving means 106 to rotate the train support 74 so as to favour the rotation of the train support 74 itself and thus oppose the removal motion of trailer 16 towards tractor 15.

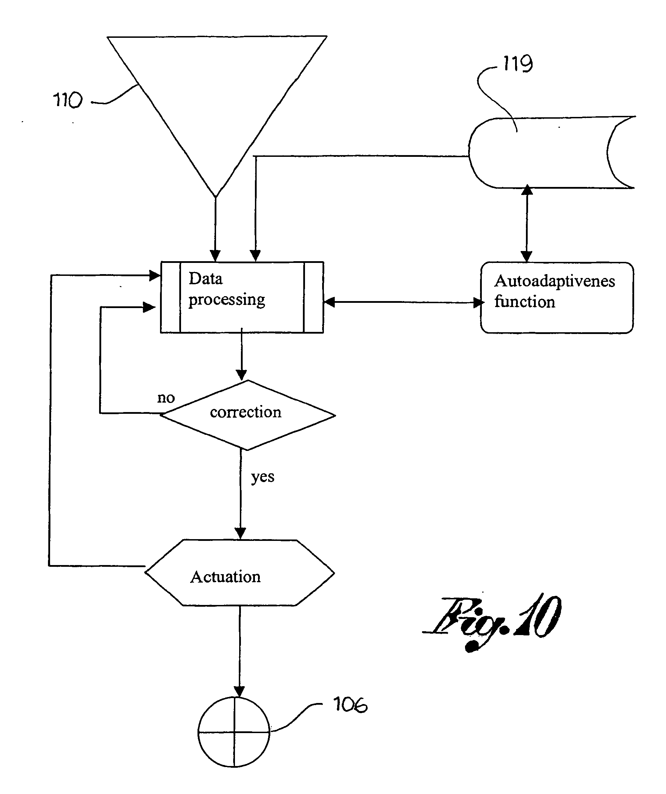

The correction apparatus described allows instantly adjusting the velocity ratio, thanks to a check and continuous correction of the same. Figure 10 shows a block diagram of a possible operating scheme of an apparatus according to the invention.

In particular, the processor or processing unit 118 is programmed with a basic mapping for carrying out an actuation on driving means 106 based on a force that will act on the loading cells 140; the hypothetical forces involved and the actuation intensity, that is, the actuation threshold value, of the same are predetermined.

In operation, microprocessor 118 reads a compression or traction force through the loading cells 140 located on the wheel axes 26, 36. By comparing the difference between the forces acting on axes 26, 36 and the data preset in the basic mapping of memory 119, processor 118 pilots the (electric or hydraulic) motor 106 and corrects the velocity ratio between the two axes 26, 36.

The correction made is checked in real time, reading the values reported by the loading cells 140 for correcting again, if needed, or for modifying the basic mapping in memory 119 of microprocessor 118, resetting it for the next adjustments (auto-adaptiveness function).

This feedback and self-adjustment function is carried out thanks to the fact that the system envisages the use of loading or movement sensors (compression or traction) between axes that instantly detect the actual running conditions of the vehicle.

As can be appreciated from the description, the correction apparatus of the present invention allows overcoming the disadvantages of the prior art.

In fact, the correction apparatus allows instantly checking the effectiveness of the velocity ratio correction.

In particular, the apparatus according to the invention is inexpensive to manufacture.

Moreover, the apparatus does not require the use of sensors and means for measuring or acquiring several parameters such as the steering angle, the instant vehicle speed, the gear put, the user required torque, the rotation speeds of the input and output shafts of the transfer case.

The apparatus according to the invention in fact envisages the direct measurement of relative movements between the axles at least relative to a running direction, by means of parameters like the geometric distance between the axles or the forces exchanged between the axles and the vehicle frame, which are clearly related to different running conditions of the vehicle that require adjustments and variations of the velocity ratio of the differential.

Thanks to the apparatus of the present invention, the transfer case exhibits a reduced mechanical stress of the input and output shafts; moreover, the vehicle tyres, in particular the tyres of the back axle or in any case of the axle mechanically connected to the output shaft of the transfer case, have a rotation speed that is constantly adapted to the actual vehicle speed so as to always an operating condition of pure rolling, without slipping phenomena.

The wear of tyres and of driving gears is therefore reduced and the vehicle stability is improved.

The control system described above is especially versatile and allows very accurate adjustments. For these features it can be used in multiple applications, both on road vehicles, on off/road vehicles (even with more than two driving axes), but also on transport means consisting of tractor and trailer.

Moreover, it is possible to check the different traction on one axle, given by a variation in the diameter of a wheel due to the wear or to the difference in pressure of a tyre.

A man skilled in the art may make several changes and adjustments to the apparatus described above in order to meet specific and incidental needs, all falling within the scope of protection defined in the following claims.

## Claims

1. Velocity correction apparatus (4) for vehicle axles comprising a first shaft (24) mechanically connectable to a first axle (26) of the vehicle, a second shaft (34) mechanically connectable to a second axle (36) of the vehicle, said first and second shaft (24, 34) being operatively connected to one another, according to a velocity ratio, so that the second shaft (34) receives the motion from the first shaft (24), adjustment means (100, 106) suitable for modifying said velocity ratio between the first and the second shaft (24, 34), **characterised in that** the apparatus comprises means (110) for detecting relative movements between the axles (26, 36) at least relative to a running direction (X) of the vehicle, the detecting means (110), based on said relative movements, controlling the adjustment means (100, 106) so as to change the velocity ratio between the first and the second shaft (24, 34) for adapting the rotation speed of the second axle (36) to the running speed of the vehicle.

2. Apparatus (4) according to claim 1, wherein the adjustment means comprise a worm screw (100) suitable for engaging with a train support (74) operatively connected to said first and second shaft (24, 34) so as to change the velocity ratio between said shafts (24, 34).

3. Apparatus (4) according to claim 2, wherein said worm screw (100) engages with an outer toothing (78) of a crown (88) of the train support (74).

4. Apparatus (4) according to claim 2 or 3, wherein the worm screw (100) is turnably supported by supports (102) connected to an outer body (104) of a transfer case (20) suitable for seating at least partly said shafts (24, 34).

5. Apparatus (4) according to any one of the previous claims, wherein the adjustment means comprise driving means (106) suitable for modifying the velocity ratio between the input and output shafts.

6. Apparatus (4) according to claim 5, wherein said driving means (106) comprise electric, hydraulic, pneumatic motors.

7. Apparatus (4) according to any one of claims 2 to 5, wherein said driving means (106) control in rotation the worm screw (100) so as to move in rotation also the train support (74) and modify the velocity ratio between said shafts (24, 34).

8. Apparatus (4) according to any one of the previous claims, wherein the detecting means produce an actuation and control signal that actuates and regulates the operation of the adjustment means (110), so as to modify the velocity ratio between the first and the second shaft (24, 34) based on parameters measured by the detecting means as regards relative movements between the axles (26, 36) at least relative to the running direction of the vehicle.

9. Apparatus (4) according to claim 8, wherein the signals measured by the detecting means (110) are sent to an actuation and control unit (114) that cooperates with a processing unit (118) for processing the same and determining an actuation and control signal that, through said actuation and control unit (114), is sent to the driving means (106) that modify the velocity ratio between said shafts (24, 34).

10. Apparatus (4) according to any one of the previous claims, wherein the vehicle is provided with a tractor (15) and with a trailer (16), the first axle (26) being the back axle of the tractor (15) and the second axle (36) being the front axle of the trailer (16).

11. Apparatus (4) according to claim 10, wherein the tractor (15) is connected to the trailer (16) by a telescopic joint (120) and the detecting means comprise a control and actuation valve (124) connected to said telescopic joint (120).

12. Apparatus (4) according to claim 11, wherein the control and actuation valve (124) comprises a first element (128) integral with the telescopic joint (120) and a second element (130) integral with the trailer.

13. Apparatus (4) according to claim 12, wherein the two elements (128, 130) are mobile relative to each other so as to shift relative to one another according to the distance between the trailer (16) and the tractor (15) and therefore between the first and the second axle (26, 36) relative to a running direction of the vehicle.

14. Apparatus (4) according to claim 13, wherein the valve (124) based on such distance between the trailer and the tractor controls said driving means (106) of the adjustment means for modifying the velocity ratio between the first and the second shaft.

15. Apparatus (4) according to claim 10, wherein the detecting means comprise one or more loading cells (140) suitable for generating a control signal to the driving means (106) based on the forces exchanged between the trailer (16) and the tractor (15) as a consequence of a motion of approach or removal of the trailer (16) relative to the tractor (15).

16. Apparatus (4) according to any one of the previous claims, wherein the first shaft (24) is mechanically connected to the second shaft (34) by a train support (74), through the interposition of driving and transmission satellites (58, 70).

17. Apparatus (4) according to claim 16, wherein a first end (62) of the first shaft (24) engages with said at least one driving satellite (58), and the second shaft (34), at a second end (66) thereof, in turn engages with at least one transmission satellite (70), the train support (74) mechanically connecting the satellites (58, 70) to each other.

18. Apparatus (4) according to claim 17, wherein said train support (74) exhibits an outer toothing (78) for actuating the train support (74).

19. Apparatus (4) according to claim 17 or 18, wherein the train support (74) comprises a crown (88) associated to a collar (90), the crown (88) carrying the outer toothing (78).

20. Apparatus (4) according to claim 19, wherein the crown (88) is coaxially associated to the collar (90) and is constrained thereto in rotation by a cover (94).

21. Apparatus (4) according to claim 20, wherein the cover (94) exhibits connecting screws (96) that integrally connect in rotation the crown (88) and the collar (90).

22. Apparatus (4) according to claim 20 or 21, wherein the cover (94), coaxially to the first shaft (24), seats bearings for supporting the rotation of the shaft itself.

23. Apparatus (4) according to claim 16, wherein a first end (62) of the first shaft (24) is mechanically connected to at least one driving satellite (58) and a second end (66) of the second shaft (34) is mechanically connected to at least one transmission satellite (70).

24. Apparatus (4) according to claim 23, wherein said driving and transmission satellites (58, 70) are constrained in rotation to one another.

25. Apparatus (4) according to claim 24, wherein said driving and transmission satellites (58, 70) are made integral with each other thus forming a transmission pin (71).

26. Apparatus (4) according to claim 25, wherein said transmission pin (71) is turnably supported in seats (72) obtained in a train support (74).

27. Apparatus (4) according to claim 26, wherein the train support (74) on a side outer surface comprises a crown (88) that carries an outer toothing (78) suitable for engaging with said adjustment means (100, 106).

## Patentansprüche

1. Geschwindigkeitskorrekturvorrichtung (4) für Fahrzeugachsen umfassend
eine erste Welle (24), die mit einer ersten Achse (26) des Fahrzeugs mechanisch verbindbar ist, eine zweite Welle (34), die mit einer zweiten Achse (36) des Fahrzeugs mechanisch verbindbar ist, wobei die erste und die zweite Welle (24, 34) entsprechend einem Geschwindigkeitsverhältnis betriebsmäßig miteinander verbunden sind, so dass die zweite Welle (34) die Bewegung von der ersten Welle (24) erhält, Stellmittel (100, 106), die zur Abänderung des Geschwindigkeitsverhältnisses zwischen der ersten und der zweiten Welle (24, 34) geeignet sind,
**dadurch gekennzeichnet,**
**dass** die Vorrichtung Mittel (110) zum Erkennen von Relativbewegungen zwischen den Achsen (26, 36) wenigstens relativ zur Fahrtrichtung (X) des Fahrzeugs umfasst, wobei die Erkennungsmittel (110) die Stellmittel (100, 106) basierend auf den Relativbewegungen steuern, um das Geschwindigkeitsverhältnis zwischen der ersten und der zweiten Welle (24, 34) zum Anpassen der Drehzahl der zweiten Achse (36) an die Fahrgeschwindigkeit des Fahrzeugs zu verändern.

2. Vorrichtung (4) gemäß Anspruch 1, wobei die Stellmittel eine Schnecke (100) umfassen, die für den Eingriff mit einer Antriebsstrangabstützung (74) geeignet ist, die mit der ersten und der zweiten Welle (24,34) antriebsmäßig verbunden ist, um das Geschwindigkeitsverhältnis zwischen den Wellen (24, 34) zu verändern.

3. Vorrichtung (4) gemäß Anspruch 2, wobei die Schnecke (100) mit einer äußeren Verzahnung (78) eines Kranzes (88) der Antriebsstrangabstützung (74) in Eingriff steht.

4. Vorrichtung (4) gemäß Anspruch 2 oder 3, wobei die Schnecke (100) durch Abstützungen (102) drehbar abgestützt ist, die mit einem äußeren Körper (104) eines Verteilergetriebes (20) verbunden sind, der zur wenigstens teilweisen Aufnahme der Wellen (24, 34) geeignet ist.

5. Vorrichtung (4) gemäß irgendeinem der vorangehenden Ansprüche, wobei die Stellmittel Antriebsmittel (106) umfassen, die zur Abänderung des Geschwindigkeitsverhältnisses zwischen der Eingangswelle und der Ausgangswelle geeignet sind.

6. Vorrichtung (4) gemäß Anspruch 5, wobei die Antriebsmittel (106) Elektromotoren, Hydraulikmotoren oder pneumatische Motoren umfassen.

7. Vorrichtung (4) gemäß einem der Ansprüche 2 bis 5, wobei die Antriebsmittel (106) bei Drehung die Schnecke (100) steuern, um bei Drehung auch die Antriebsstrangabstützung (74) zu bewegen und das Geschwindigkeitsverhältnis zwischen den Wellen (24, 34) zu verändern.

8. Vorrichtung (4) gemäß irgendeinem der vorangehenden Ansprüche, wobei die Erkennungsmittel ein Betätigungs- und Steuersignal erzeugen, das den Betrieb der Stellmittel (100) aktiviert und reguliert, um das Geschwindigkeitsverhältnis zwischen der ersten und der zweiten Welle (24, 34) basierend auf Parametern, die von den Erkennungsmitteln hinsichtlich der Relativbewegungen zwischen den Achsen (26, 36) wenigstens relativ zu der Fahrtrichtung des Fahrzeugs gemessen wurden, zu verändern.

9. Vorrichtung (4) gemäß Anspruch 8, wobei die Signale, die von den Erkennungsmitteln (110) gemessen wurden, an eine Aktivierungs- und Steuereinheit (114) übertragen werden, die mit einer Verarbeitungseinheit (118) zum Verarbeiten derselben und zum Bestimmen eines Aktivierungs- und Steuersignals zusammenwirkt, das von der Betätigungs- und Steuereinheit (114) an die Antriebsmittel (106) gesendet wird, die das Geschwindigkeitsverhältnis zwischen den Wellen (24, 34) ändern.

10. Vorrichtung (4) gemäß irgendeinem der vorangehenden Ansprüche, wobei das Fahrzeug mit einer Zugmaschine (15) und einem Anhänger (16) versehen ist, wobei die erste Achse (26) die Hinterachse der Zugmaschine (15) ist und die zweite Achse (36) die Vorderachse des Anhängers (16) ist.

11. Vorrichtung (4) gemäß Anspruch 10, wobei die Zugmaschine (15) mit dem Anhänger (16) durch eine Teleskopverbindung (120) verbunden ist und die Erkennungsmittel ein Steuer- und Betätigungsventil (124) umfassen, das mit der Teleskopverbindung (120) verbunden ist.

12. Vorrichtung (4) gemäß Anspruch 11, wobei das Steuer- und Betätigungsventil (124) ein erstes Element (128), das mit der Teleskopverbindung (120) einstückig vorgesehen ist, und ein zweites Element (130), das mit dem Anhänger einstückig vorgesehen ist, umfasst.

13. Vorrichtung (4) gemäß Anspruch 12, wobei die zwei Elemente (128, 130) relativ zueinander derart beweglich sind, dass sie relativ zueinander gemäß dem Abstand zwischen dem Anhänger (16) und der Zugmaschine (15) und daher dem zwischen der ersten und der zweiten Achse (26, 36) relativ zu einer Fahrtrichtung des Fahrzeugs verlagerbar sind.

14. Vorrichtung (4) gemäß Anspruch 13, wobei das Ventil (124) basierend auf dem Abstand zwischen dem Anhänger und der Zugmaschine die Antriebsmittel (106) der Stellmittel zum Abändern des Geschwindigkeitsverhältnisses zwischen der ersten und der zweiten Welle steuert.

15. Vorrichtung (4) gemäß Anspruch 10, wobei die Erkennungsmittel eine oder mehrere Kraftmesseinrichtungen (140) umfassen, die zur Erzeugung eines Steuersignals an die Antriebsmittel (106) basierend auf den Kräften, die zwischen dem Anhänger (16) und der Zugmaschine (15) als Folge einer Annäherungsbewegung des Anhängers (16) zu der Zugmaschine (15) oder eines Entfernens von dieser weg ausgetauscht werden, geeignet sind.

16. Vorrichtung (4) gemäß irgendeinem der vorangehenden Ansprüche, wobei die erste Welle (24) mit der zweiten Welle (24) durch eine Antriebsstrangabstützung (74) unter Zwischenschaltung von Antriebs- und Übertragungsplanetenrädern (58, 70) mechanisch verbunden ist.

17. Vorrichtung (4) gemäß Anspruch 16, wobei ein erstes Ende (62) der ersten Welle (24) mit dem wenigstens einen Antriebsplanetenrad (58) in Eingriff steht und wobei die zweite Welle (34) an ihrem zweiten Ende mit wenigstens einem Übertragungsplanetenrad (70) in Eingriff steht, wobei die Antriebsstrangabstützung (74) die Planetenräder (58, 70) mechanisch miteinander verbindet.

18. Vorrichtung (4) gemäß Anspruch 17, wobei die Antriebsstrangabstützung (74) eine äußere Verzahnung (78) zum Betätigen der Antriebsstrangabstützung (74) aufweist

19. Vorrichtung (4) gemäß Anspruch 17 oder 18, wobei die Antriebsstrangabstützung (74) einen Kranz (88) umfasst, die mit einem Kragen (90) verbunden ist, wobei der Kranz (88) die äußere Verzahnung (78) trägt.

20. Vorrichtung (4) gemäß Anspruch 19, wobei der Kranz (88) mit dem Kragen (90) koaxial verbunden ist und durch eine Abdeckung (94) hinsichtlich Drehung festgesetzt ist.

21. Vorrichtung (4) gemäß Anspruch 20, wobei die Abdeckung (94) Verbindungsschrauben (96) aufweist, die der Kranz (88) und den Kragen (90) bei Drehung einstückig verbinden.

22. Vorrichtung (4) gemäß Anspruch 20 oder 21, wobei die Abdeckung (94) koaxial zu der ersten Welle (24) Lager zum Abstützen der Welle bei Drehung aufnimmt.

23. Vorrichtung (4) gemäß Anspruch 16, wobei ein erstes Ende (62) der ersten Welle (24) mit wenigstens einem Antriebsplanetenrad (58) und das zweite Ende (66) der zweiten Welle (34) mit wenigstens einem Übertragungsplanetenrad (70) mechanisch verbunden ist.

24. Vorrichtung (4) gemäß Anspruch 23, wobei das Antriebs- und das Übertragungsplanetenrad (58, 70) drehmäßig zueinander festgesetzt sind.

25. Vorrichtung (4) gemäß Anspruch 24, wobei das Antriebs- und das Übertragungsplanetenrad (58, 70) einstückig miteinander ausgebildet sind, wodurch ein Getriebezapfen (71) gebildet wird.

26. Vorrichtung (4) gemäß Anspruch 25, wobei der Getriebezapfen (71) in Sitzen (72) drehbar abgestützt ist, die in einer Antriebsstrangabstützung (74) vorgesehen sind.

27. Vorrichtung (4) gemäß Anspruch 26, wobei die Antriebsstrangabstützung (74) an einer äußeren Seitenfläche einen Kranz (88) umfasst, die eine äußere Verzahnung (78) trägt, die für den Eingriff mit den Stellmitteln (100, 106) geeignet ist.

## Revendications

1. Appareil de correction de vitesse (4) pour des essieux de véhicules comprenant un premier arbre (24) pouvant être relié mécaniquement à un premier essieu (26) du véhicule, un second arbre (34) pouvant être relié à un second essieu (36) du véhicule, lesdits premier et second arbres (24,34) pouvant être reliés fonctionnellement l'un à l'autre, selon un rapport de démultiplication, de sorte que le second arbre (34) reçoit le mouvement du premier arbre (24), des moyens de réglage (100,106) adaptés pour modifier ledit rapport de démultiplication entre les premier et second arbres (24,34),
**caractérisé en ce que** l'appareil comprend des moyens (110) pour détecter des mouvements relatifs entre les essieux (26,36), au moins par rapport à une direction d'avance (X) du véhicule, les moyens de détection (110), en se basant sur lesdits mouvements relatifs, commandant les moyens de réglage (100,106) de façon à changer le rapport de démultiplication entre les premier et second arbres (24,34) pour adapter la vitesse de rotation du second essieu (36) à la vitesse d'avance du véhicule.

2. Appareil (4) selon la revendication 1, dans lequel les moyens de réglage comprennent une vis sans fin (100) adaptée pour engager un support de train d'engrenages (74) relié fonctionnellement auxdits premier et second arbres (24,34) de façon à changer le rapport de démultiplication entre lesdits arbres (24,34).

3. Appareil (4) selon la revendication 2, dans lequel ladite vis sans fin (100) s'engrène avec une denture externe (78) d'une couronne (88) du support de train d'engrenages (74).

4. Appareil (4) selon la revendication 2 ou 3, dans lequel la vis sans fin (100) est supportée de manière rotative par des supports (102) reliés à un corps externe (104) d'un boîtier de transfert (20) adapté pour recevoir au moins partiellement lesdits arbres (24,34).

5. Appareil (4) selon l'une quelconque des revendications précédentes, dans lequel les moyens de réglage comprennent des moyens d'entraînement (106) adaptés pour modifier le rapport de démultiplication entre les arbres d'entrée et de sortie.

6. Appareil (4) selon la revendication 5, dans lequel lesdits moyens d'entraînement (106) comprennent des moteurs électriques, hydrauliques, pneumatiques.

7. Appareil (4) selon l'une quelconque des revendications 2 à 5, dans lequel lesdits moyens d'entraînement (106) commandent en rotation la vis sans fin (100) de façon à déplacer également en rotation le support de train d'engrenages (74) et à modifier le rapport de démultiplication entre lesdits arbres (24,34).

8. Appareil (4) selon l'une quelconque des revendications précédentes, dans lequel les moyens de détection produisent un signal de commande et d'actionnement qui actionne et régule le fonctionnement des moyens de réglage (110), de façon à modifier le rapport de démultiplication entre les premier et second arbres (24,34) en se basant sur des paramètres mesurés par les moyens de détection en ce qui concerne des mouvements relatifs entre les essieux (26,36) au moins par rapport à la direction d'avance du véhicule.

9. Appareil (4) selon la revendication 8, dans lequel les signaux mesurés par les moyens de détection (110) sont envoyés à une unité d'actionnement et de commande (114) qui coopère avec une unité de traitement (118) pour traiter ceux-ci et déterminer un signal d'actionnement et de commande qui, par l'intermédiaire de ladite unité d'actionnement et de commande (114), est envoyé aux moyens d'entraînement (106) qui modifient le rapport de démultiplication entre lesdits arbres (24,34).

10. Appareil (4) selon l'une quelconque des revendications précédentes, dans lequel le véhicule est muni d'un tracteur (15) et d'une remorque (16), le premier essieu (26) étant l'essieu arrière du tracteur (15) et le second essieu (36) étant l'essieu avant de la remorque (16).

11. Appareil (4) selon la revendication 10, dans lequel le tracteur (15) est relié à la remorque (16) par un joint télescopique (120) et les moyens de détection comprennent une valve de commande et d'actionnement (124) raccordée audit joint télescopique (120).

12. Appareil (4) selon la revendication 11, dans lequel la valve de commande et d'actionnement (124) comprend un premier élément (128) solidaire du joint télescopique (120) et un second élément (130) solidaire de la remorque.

13. Appareil (4) selon la revendication 12, dans lequel les deux éléments (128,130) sont mobiles l'un par rapport à l'autre, de façon à se déplacer l'un par rapport à l'autre selon la distance entre la remorque (16) et le tracteur (15) et, donc, entre les premier et second essieux (26,36) par rapport à une direction d'avance du véhicule.

14. Appareil (4) selon la revendication 13, dans lequel la valve (124), en fonction d'une telle distance entre la remorque et le tracteur, commande lesdits moyens d'entraînement (106) des moyens de réglage pour modifier le rapport de démultiplication entre le premier arbre et le second arbre.

15. Appareil (4) selon la revendication 10, dans lequel les moyens de détection comprennent une ou plusieurs cellules de charge (140) adaptées pour engendrer un signal de commande aux moyens d'entraînement (106) en se basant sur les forces échangées entre la remorque (16) et le tracteur (15) à la suite d'un mouvement d'approche ou d'éloignement de la remorque (16) par rapport au tracteur (15).

16. Appareil (4) selon l'une quelconque des revendications précédentes, dans lequel le premier arbre (24) est mécaniquement relié au second arbre (34) par un support de train d'engrenages (74), par l'interposition de satellites d'entraînement et de transmission (58,70).

17. Appareil (4) selon la revendication 16, dans lequel une première extrémité (62) du premier arbre (24) s'engrène avec ledit au moins un satellite d'entraînement (58), et le second arbre (34), au niveau d'une seconde extrémité (66) de celui-ci, s'engrène à son tour avec au moins un satellite de transmission (70), le support de train d'engrenages (74) reliant mécaniquement les satellites (58,70) l'un à l'autre.

18. Appareil (4) selon la revendication 17, dans lequel ledit support de train d'engrenages (74) montre une denture externe (78) pour actionner le support de train d'engrenages (74).

19. Appareil (4) selon la revendication 17 ou 18, dans lequel le support de train d'engrenages (74) comprend une couronne (88) associée à un collet (90), la couronne (88) portant la denture externe (78).

20. Appareil (4) selon la revendication 19, dans lequel la couronne (88) est associée coaxialement au collet (90) et est assujettie à celui-ci en rotation par un couvercle (94).

21. Appareil (4) selon la revendication 20, dans lequel le couvercle (94) présente des vis de liaison (96) qui relient solidairement en rotation la couronne (88) et le collet (90).

22. Appareil (4) selon la revendication 20 ou 21, dans lequel le couvercle (94), coaxialement au premier arbre (24), reçoit des paliers pour supporter la rotation de l'arbre lui-même.

23. Appareil (4) selon la revendication 16, dans lequel une première extrémité (62) du premier arbre (24) est mécaniquement reliée à au moins un satellite d'entraînement (58) et une seconde extrémité (66) du second arbre (34) est mécaniquement reliée à au moins un satellite de transmission (70).

24. Appareil (4) selon la revendication 23, dans lequel lesdits satellites d'entraînement et de transmission (58,70) sont assujettis en rotation l'un à l'autre.

25. Appareil (4) selon la revendication 24, dans lequel lesdits satellites d'entraînement et de transmission (58,70) sont réalisés de manière solidaire l'un de l'autre en formant ainsi un axe de transmission (71).

26. Appareil (4) selon la revendication 25, dans lequel ledit axe de transmission (71) est supporté de façon rotative dans des logements (72) obtenus dans un support de train d'engrenages(74).

27. Appareil (4) selon la revendication 26, dans lequel le support de train d'engrenages (74) sur une surface externe latérale comprend une couronne (88) qui porte une denture externe (78) adaptée pour s'engrener avec lesdits moyens de réglage (100,106).
